# EUROPÄISCHE PATENTSCHRIFT

(11) **EP 3 950 558 B1**
(45) Veröffentlichungstag und Bekanntmachung des Hinweises auf die Patenterteilung: **26.08.2026**
(21) Anmeldenummer: 21197655.0
(22) Anmeldetag: 07.04.2017
(51) Int. Cl.: B66C 13/40, B66C 13/46, E02F 9/26, B66C 13/54, E02F 9/16, E02F 9/20, G09B 9/05

(54) **FERNSTEUER-EINRICHTUNG FÜR KRAN, BAUMASCHINE UND/ODER FLURFÖRDERZEUG**
REMOTE CONTROL DEVICE FOR CRANE, CONSTRUCTION MACHINE AND INDUSTRIAL TRUCK
DISPOSITIF DE COMMANDE À DISTANCE POUR GRUES, MACHINES DE CONSTRUCTION ET/OU CHARIOTS DE MANUTENTION

(30) Priorität: 08.04.2016 DE 202016002295 U
(43) Veröffentlichungstag der Anmeldung: 09.02.2022
(62) Dokumentnummer(n) der früheren Anmeldung(en) nach Art. 76 EPÜ: 17721522.5 / 3 408 210
(73) Patentinhaber: Liebherr-Werk Biberach GmbH, 88400 Biberach an der Riß (DE)
(72) Erfinder: PALBERG, Michael, 88499 Riedlingen (DE); RESCH, Jürgen, 88456 Degernau (DE); FENKER, Oliver, 88447 Warthausen (DE)
(74) Vertreter: Lorenz Seidler Gossel Part. mbB

(56) Entgegenhaltungen:
- WO-A1-2015/155845
- WO-A1-2017/121636
- WO-A1-2017/121639
- DE-A1- 102010 016 113
- DE-A1- 102013 011 818
- DE-A1- 102014 218 749
- JP-A- 2013 116 773

## Beschreibung

Die vorliegende Erfindung betrifft eine Fernsteuer-Einrichtung für einen Kran, eine Baumaschine und/oder ein Flurförderzeug, mit einem Steuerstand, der zumindest ein Eingabemittel zum Eingeben von Steuerbefehlen sowie eine Signalübertragungseinrichtung zum Übertragen der eingegebenen Steuerbefehle auf die Steuervorrichtung des Krans, der Baumaschine oder des Flurförderzeugs aufweist, sowie einer Anzeigevorrichtung zum Anzeigen einer Darstellung der Maschinenumgebung und/oder eines Arbeitswerkzeugs wie Ausleger oder Lasthaken, wobei ein Bewegungsbestimmungsmodul zum Bestimmen von Bewegungen und/oder Verformungen der Maschinenkomponenten in Abhängigkeit der eingegebenen Steuerbefehle vorgesehen ist.

Solche Fernsteuereinrichtungen sind beispielsweise aus den Schriften WO 2017/121636 A1 und WO 2017/121639 A1, die Stand der Technik nach Artikel 54(3) EPÜ bilden, bekannt. Weitere, ähnliche Fernsteuereinrichtungen für Krane zeigen die Schriften JP 2013 116773 A, die eine Fernsteuer-Einrichtung gemäß dem Oberbegriff des Anspruchs 1 offenbart, und WO 2015/155845 A1.

Krane und ähnliche Großgeräte wie Bohrrammgeräte, Surface Miner oder Seilbagger sind in der Bedienung und Steuerung sehr komplex. Dabei ist nicht nur die Vielzahl der Steuerungsfunktionen und deren Zusammenwirken sowie die damit einhergehenden, in ihrer Gesamtheit recht komplexen Eingabemittel wie Joysticks, Fußpedale und Steuerungsschalter ein Problem, sondern auch die oft ungewohnten, maschinenspezifischen Reaktionen der Maschinenstruktur auf Bewegungen der Stellantriebe. Krane wie beispielsweise Turmdrehkrane oder Teleskop-Wippkrane, aber auch Hafen- oder Maritimkrane besitzen lange, schlanke Strukturbauteile wie Ausleger- oder Turmstrukturen, die sich verwinden und relativ weich sind, so dass mit Beschleunigungs- oder Abbremsvorgängen der Stellantriebe Strukturverformungen und Pendelbewegungen einhergehen, die für erfahrene Kranführer als eine Art Rückmeldung für die Steuerungsbetätigung dienen. Anders als bei Kleingeräten mit näherungsweise als starr anzunehmenden Strukturen kann es beispielsweise bei Turmdrehkranen zu Verformungen der Turmstruktur und des Auslegersystems kommen, wenn eine Last aufgenommen wird, oder es kann die Last beim Drehen um die aufrechte Achse nachpendeln und der Ausleger dementsprechend rotatorisch nachschwingen. Ähnliches kann bei Seilbaggern oder Bohrrammgeräten auftreten, so dass ein Kranführer bzw. Maschinenführer unsicher wird, wenn er zu Steuervorgängen nicht die hierbei üblichen, entsprechenden Kranreaktionen erfährt.

Solchermaßen fehlende Kranreaktionen und mangelnde Realitätsnähe im Allgemeinen sind insbesondere bei der Fernsteuerung von Kranen und Baumaschinen bzw. Flurförderzeugen ein Problem, das den fernsteuernden Maschinenführer unsicher werden lässt. Wird beispielsweise ein Kran ferngesteuert, spürt der Fernbediener nicht die üblichen Kranreaktionen, die ihm bei direkter Steuerung in der Kranführerkabine intuitiv das Gefühl geben, richtig oder falsch gesteuert zu haben.

Um die Fernsteuerung realitätsnäher zu gestalten, wurde daher bereits angedacht, einen näherungsweise realistischen Steuerstand zu verwenden, der beispielsweise der Kranführerkabine eines jeweiligen Krantyps entsprechen und über dort vorgesehene Eingabemittel wie Joysticks, Pedale, Steuerschalter oder Touchscreens Steuerbefehle verfügen kann. Zudem wird auf einer Anzeigevorrichtung, die bekanntermaßen mehrere Bildschirme umfassen kann, die im Sichtfeld des Steuerstands angeordnet sind, eine echte oder virtuelle Darstellung der Kranumgebung sowie der vom Steuerstand aus sichtbaren Krankomponenten wie beispielsweise Ausleger und Lasthaken dargestellt, wobei eine "echte" Darstellung von Kameras an der ferngesteuerten Maschine bereitgestellt und die virtuelle Darstellung der Kranumgebung und der Krankomponenten von einem grafischen Simulationsmodul in Abhängigkeit der eingegebenen Steuerbefehle errechnet werden kann.

Ein Fernsteuerungssystem für einen Kran ist beispielsweise aus der Schrift DE 10 2012 216 489 A1 bekannt, wobei diese vorbekannte Fernsteuerung für Arbeitsmaschinen unterschiedlicher Typen verwendbar sein soll. Dabei ist die Fernsteuerung mit einem Selektier-Mechanismus versehen, der es erlaubt, die Anzahl der Bedien- und Auswahlmenüs der Anzeige der Fernsteuerung zu reduzieren, je nachdem in welcher Konfiguration sich die angebundene Arbeitsmaschine befindet. Bei dieser Fernsteuerung fehlt es jedoch in der zuvor beschriebenen Weise an einer ausreichenden Realitätsnähe, die auch durch die Anpassung der Bedienmenüs an die jeweilige Arbeitsmaschine kaum verbessert wird.

Ein Kran-Simulator, der mit virtuellen Darstellungen der Kranumgebung arbeitet, ist beispielsweise aus der Schrift DE 10 2013 011 818 A1 bekannt. Dort ist eine Kranführerkabine als Steuerstand mit entsprechenden Eingabemitteln vorgesehen, wobei die Sichtfenster bzw. die Verglasung der nachgebildeten Kranführerkabine durch Bildschirme ersetzt sind, auf denen die virtuelle Darstellung der Kranumgebung angezeigt wird. Durch ein technisches Simulationsmodul soll dabei auch das dynamische Verhalten der Steuerungs- und Antriebskomponenten simuliert und bei der Bildschirmdarstellung berücksichtigt werden, wobei hier vor allem die bei bestimmten Kranbewegungen auftretenden Stellbewegungen von Krankomponenten wie beispielsweise des Hubwerks dargestellt werden.

Hiervon ausgehend liegt der vorliegenden Erfindung die Aufgabe zugrunde, eine verbesserte Fernsteuer-Einrichtung der eingangs genannten Art zu schaffen, die Nachteile des Standes der Technik vermeidet und Letzteren in vorteilhafter Weise weiterbildet. Insbesondere soll eine realitätsnähere Simulation des Kran- bzw. Maschinenbetriebs erreicht werden, die das tatsächliche Kran- bzw. Maschinenverhalten besser vermittelt und die Fernsteuerbarkeit sicherer macht. Erfindungsgemäß wird die genannte Aufgabe durch einen Fernsteuer-Einrichtung gemäß Anspruch 1 gelöst. Bevorzugte Ausgestaltungen der Erfindung sind Gegenstand der abhängigen Ansprüche.

Es wird also vorgeschlagen, Kran- bzw. Maschinenreaktionen auf am Steuerstand eingegebene Steuerbefehle beispielsweise in Form von Kranbewegungen und/oder -verformungen nicht nur in Form einer Darstellung auf der Anzeigevorrichtung darzustellen, sondern in eine mit der Kran- bzw. Maschinenreaktion einhergehende, tatsächliche Bewegung des Steuerstands der Fernsteuerung umzusetzen, um dem Fernsteuerungs-Nutzer die dynamischen Maschinenreaktionen realitätsnäher zu vermitteln und erfahren zu lassen. Der Steuerstand, der beispielsweise einen Bedienersessel umfassen kann, ist hierzu nicht mehr statisch starr im Raum, bzw. am Boden montiert, sondern von einer Antriebsvorrichtung im Raum bewegbar. Erfindungsgemäß ist der Steuerstand der Fernsteuerungs-Einrichtung beweglich gelagert und von einer Antriebsvorrichtung in Abhängigkeit der von dem Bewegungsbestimmungsmodul bestimmten Bewegungen und/oder Verformung der Maschinenkomponenten bewegbar. Bestimmt das Bewegungsbestimmungsmodul Auslenkungen von Maschinenkomponenten wie beispielsweise des Kranturms durch Stellbewegungen oder Verformungen, die auf die Position der echten Kranführerkabine Einfluss hätten, wird die Antriebsvorrichtung von einer Antriebssteuervorrichtung entsprechend angesteuert, um die Bewegung der Kranführerkabine nachzubilden und den Steuerstand entsprechend zu bewegen. Wird beispielsweise am Steuerstand ein Befehl zum Verdrehen des Krans um eine aufrechte Achse eingegeben, wird der Steuerstand von der Antriebsvorrichtung entsprechend um die aufrechte Achse verdreht. Wird beispielsweise der Steuerbefehl zum Anheben einer schweren Last eingegeben, was in der Realität zu einem leichten Nicken der Kranstruktur unter leichter Verwindung des Turms führen kann, wird der Steuerstand von der Antriebsvorrichtung leicht nach vorne verfahren und/oder leicht nach vorne verkippt.

Um eine möglichst realitätsnahe Nachbildung der im echten Betrieb auftretenden Steuerstandbewegungen zu ermöglichen, kann die Antriebsvorrichtung mehrachsig bewegbar ausgebildet sein und/oder sowohl rotatorische als auch translatorische Bewegungen ausführen. Insbesondere kann der Steuerstand mehrachsig beweglich gelagert sein und die Antriebsvorrichtung zumindest eine aufrechte Drehachse und zumindest eine liegende Wippachse und/oder zwei liegend ausgerichtete Translationsachsen umfassen. Um auch komplexe Steuerstandsbewegungen nachbilden zu können, kann die Antriebsvorrichtung drei Rotations- bzw. Kippachsen aufweisen bzw. dreiachsig rotatorisch arbeitend ausgebildet sein und dreiachsig translatorisch arbeitend ausgebildet sein, so dass der Steuerstand um alle drei Raumachsen verdreht bzw. verkippt und in alle drei Raumrichtungen translatorisch verfahren werden kann. Je nach zu simulierendem Kran- bzw. Maschinentyp können auch einfachere Ausbildungen der Antriebsvorrichtung mit weniger Bewegungsachsen in Betracht kommen.

In vorteilhafter Weise kann die Fernsteuereinrichtung an verschiedene Geräte, insbesondere verschiedene Gerätetypen angebunden werden und eine Steuerungskommunikation mit dem jeweils ausgewählten Gerät aufbauen. Dies können insbesondere verschiedene, auf einer Baustelle genutzte Gerätschaften wie Krane, Bagger, Raupen oder ähnliche Maschinen, aber auch an verschiedenen Orten verwendete Geräte sein. Je nachdem, welches Gerät ferngesteuert werden soll, kann von der Fernsteuereinrichtung her und/oder vom jeweiligen Gerät her eine Steuerungs-Kommunikationsverbindung aufgebaut werden, beispielsweise durch Anwählen einer jeweiligen IP-Adresse, wenn die Verbindung über ein Netzwerk erfolgt, oder auch in anderer Weise. Um eine ausreichend rasche Datenkommunikation zwischen Fernsteuerung und Maschine zu ermöglichen, wird vorteilhafterweise eine Kommunikationsverbindung hoher Bandbreite gewählt, um Echtzeitprobleme bzw. Zeitversatz zwischen Steuerbefehlen und Maschinenreaktionen zu vermeiden.

Um die Maschinenreaktionen verschiedener Maschinentypen realitätsnah abbilden zu können, weist die Fernsteuereinrichtung gemäß der Erfindung ein Konfigurationsmodul auf, mittels dessen die Fernsteuereinrichtung wahlweise für einen jeweils fernzusteuernden Maschinentyp vorkonfiguriert werden kann. Die genannten Vorkonfigurationsmittel können in an sich bekannter Weise die Belegung der Steuerhebel und Steuertasten sowie die Auswahl der Betätigungsmenüs und Bildschirmdarstellungen an das jeweilige Gerät anpassen. Insbesondere können aber auch Vorkonfigurationsmittel für die Bewegungssteuerung und/oder Abbildung der Maschinenreaktionen vorgesehen sein, mittels derer die Antriebsvorrichtungen zum Bewegen des Steuerstands umkonfiguriert und an die Maschinenreaktionen des jeweiligen Maschinentyps angepasst werden können, da beispielsweise ein oben drehender Turmdrehkran anders reagiert als ein unten drehender Turmdrehkran, oder wiederum ein Teleskop-Wippkran anders reagiert als ein Turmdrehkran, oder ein Bagger anders reagiert als ein Kran. Insbesondere können mittels den genannten Konfigurationsmitteln auch Arbeits- und/oder Randparameter des Bewegungsbestimmungsmoduls umkonfiguriert werden, so dass das Bewegungsbestimmungsmodul je nach ausgewähltem Maschinentyp die Bewegungen und/oder Verformungen von Maschinenkomponenten passend für den jeweiligen Maschinentyp bestimmt. Durch die Ansteuerung der Antriebsvorrichtung mit den solchermaßen angepassten Bewegungsgrößen kann eine realistische Reaktion des Steuerstands erzeugt werden.

Das Konfigurationsmodul kann ferner auch Vorkonfigurationsmittel zum Anpassen der Anzeigeeinrichtung und der darauf wiedergegebenen Darstellung der Maschinenumgebung und/oder des Arbeitswerkzeugs aufweisen, wobei die genannten Vorkonfigurationsmittel vorzugsweise die Darstellung und/oder die Anzeigeeinrichtung an die am jeweiligen ferngesteuerten Maschinentyp vorhandenen oder einsetzbaren Kameras anpassen kann und/oder, falls die Darstellung virtuell berechnet wird, die Parameter für die Berechnung der virtuellen Darstellung an den jeweiligen Maschinentyp anpassen kann.

Das genannte Bewegungsbestimmungsmodul kann grundsätzlich verschieden ausgebildet sein. Beispielsweise kann das Bewegungsbestimmungsmodul echte Reaktionen der ferngesteuerten Maschine mittels einer geeigneten Sensorik erfassen, wobei entsprechende Sensorsignale auf die Fernsteuerung übertragen werden können, um deren Steuerstand dann entsprechend zu betätigen bzw. anzusteuern. Die Erfassung solcher echter Maschinenreaktionen der ferngesteuerten Maschine kann beispielsweise die Erfassung von Bewegungen einschließen, beispielsweise den Verfahrweg einer Laufkatze, das Auf- und Abspielen eines Hubseils eines Krans etc. Insbesondere können aber auch Verformungen der Struktur der ferngesteuerten Maschine erfasst werden, beispielsweise Nickbewegungen der Kranführerkabine in Folge von Turmverformungen, beispielsweise mittels entsprechender Neigungs- und/oder Beschleunigungssensoren.

Alternativ oder zusätzlich zur Erfassung von Bewegungen und/oder Verformungen der echten, ferngesteuerten Maschine kann das Bewegungsbestimmungsmodul die genannten Reaktionen auf eingegebene Steuerbefehle in Form von Bewegungen und/oder Verformungen von Maschinenteilen aber auch simulieren und hierfür ein entsprechendes Simulationsmodul aufweisen, welches in Abhängigkeit der eingegebenen Steuerbefehle entsprechende Reaktionsbewegungen und/oder -verformungen berechnet und/oder mit Hilfe von Steuerungs- und/oder Bewegungskomponenten, die zum Simulationsmodul gehören, abbilden und messen kann. Eine solche Simulation kann Zeitversatzprobleme zwischen Fernsteuerungs-Steuerstand und ferngesteuerter Maschine insbesondere bei langsameren Kommunikationsverbindungen bzw. weiteren Entfernungsstrecken vermeiden.

Ist die Fernsteuereinrichtung in vorgenannter Weise für verschiedene Maschinentypen einsetzbar, kann das Konfigurationsmodul die Berechnungsparameter und/oder -algorithmen für die Simulation der Bewegungen und/oder Verformungen an den jeweils ausgewählten Maschinentyp anpassen. Insbesondere können Dynamikpakete bzw. Daten- und Algorithmussätze zu verschiedenen fernzusteuernden Maschinen aus einer Datenbank in das Simulationsmodul eingelesen werden, um passend für die jeweils ausgewählte Maschine die Bewegungen und Verformungen simulieren zu können. Das Einlesen der genannten Dynamikdatenpakete kann hierbei online aus einer Datenbank erfolgen. Alternativ oder zusätzlich kann auch das Simulationsmodul selbst mit einer Speichereinrichtung versehen sein, in der nach Art einer Bibliothek verschiedene Daten- und Algorithmussätze abgespeichert sind.

In Weiterbildung der Erfindung sind auch Mischformen möglich, bei denen ein Teil der Reaktionen an der echten, ferngesteuerten Maschine erfasst werden und ein anderer Teil der Reaktionen durch das Simulationsmodul bestimmt wird.

Nach einem weiteren Aspekt ist das Bewegungsbestimmungsmodul dabei derart ausgebildet, dass die Kran- bzw. Maschinenstruktur nicht als starre, sozusagen unendlich steife Struktur betrachtet wird, sondern als elastisch verformbare und/oder nachgiebige und/oder relativ weiche Struktur angenommen wird, die - zusätzlich zu den Stellbewegungsachsen der Maschine wie beispielsweise der Auslegerwippachse oder der Turmdrehachse - Bewegungen und/oder Positionsänderungen durch Verformungen der Strukturbauteile zulässt. Die Berücksichtigung der Beweglichkeit der Maschinenstruktur infolge von Strukturverformungen unter Last oder dynamischen Belastungen ist gerade bei langgestreckten, schlanken und von den statischen und dynamischen Randbedingungen her bewusst - unter Berücksichtigung der notwendigen Sicherheiten - ausgereizten Strukturen wie bei Kranen von Bedeutung, da hier spürbare Bewegungsanteile beispielsweise für die Kranführerkabine, aber auch die Lasthakenposition durch die Verformungen der Strukturbauteile hinzukommen. Um hier eine tatsächlich realistische Schulung bzw. ein realitätsnahes Training ermöglichen zu können, berücksichtigt das Bewegungsbestimmungsmodul solche Verformungen der Maschinenstruktur unter statischen oder dynamischen Belastungen.

Insbesondere kann die Bestimmungseinrichtung zur Bestimmung solcher Strukturverformungen eine Berechnungseinheit aufweisen, die diese Strukturverformungen anhand eines gespeicherten Berechnungsmodells in Abhängigkeit der am Steuerstand eingegebenen Steuerbefehle berechnet. Ein solches Modell kann ähnlich einem Finite-Elemente-Modell aufgebaut sein oder ein Finite-Elemente-Modell sein, wobei vorteilhafterweise jedoch ein gegenüber einem Finite-Elemente-Modell deutlich vereinfachtes Modell verwendet wird, das beispielsweise empirisch durch Erfassung von Strukturverformungen unter bestimmten Steuerbefehlen und/oder Belastungszuständen am echten Kran bzw. der echten Maschine bestimmt werden kann. Ein solches Berechnungsmodell kann beispielsweise mit Tabellen arbeiten, in denen bestimmten Steuerbefehlen bestimmte Verformungen zugeordnet sind, wobei Zwischenwerte der Steuerbefehle mittels einer Interpolationsvorrichtung in entsprechende Verformungen umgerechnet werden können.

Die Verwendung eines solchen gegenüber einem Finite-Elemente-Modell vereinfachten Berechnungsmodells erlaubt eine zeitlich schnellere Bestimmung der Strukturverformungen und damit eine realitätsnähere Simulation von Maschinenbewegungen in Echtzeit bzw. nahezu Echtzeit unter weniger Rechenleistung.

Die vom Bewegungsbestimmungsmodul berücksichtigten Strukturteilverformungen können einerseits bei der Ansteuerung der Antriebsvorrichtung zum Bewegen des Steuerstands berücksichtigt werden, so dass der Steuerstand die durch die Strukturteilverformungen auftretenden Steuerstandbewegungen nachbildet.

Alternativ oder zusätzlich können bestimmte oder erfasste Strukturteilverformungen auch bei der Darstellung der Maschinenumgebung und/oder der darin sichtbaren Maschinenkomponenten berücksichtigt werden, beispielsweise dahingehend, dass in der Darstellung die Durchbiegung des Auslegers dargestellt wird oder der Horizont der Kranumgebung ein Stück nach oben gefahren wird, um ein leichtes Nach-vorne-Nicken der Kranführerkabine durch beispielsweise eine Turmverformung nachzubilden.

Die am Steuerstand angezeigte Darstellung der Maschinenumgebung und/oder des Arbeitswerkzeugs der ferngesteuerten Maschine kann eine echte Darstellung umfassen, die mittels zumindest einer im Bereich der ferngesteuerten Maschine vorgesehenen Kamera bereitgestellt wird, und/oder auch eine virtuelle Darstellung umfassen, die mittels eines grafischen Simulationsmoduls in Abhängigkeit der eingegebenen Steuerbefehle errechnet wird.

Eine solche echte, kameragenerierte Darstellung der Maschinenumgebung und/oder des Arbeitswerkzeugs kann insbesondere in Form eines Livebilds bzw. fernsehbildartigen Videobilds erzeugt werden, wobei von der zumindest einen Kamera an der ferngesteuerten Maschine ein entsprechendes Videosignal zu dem entfernt angeordneten Steuerstand der Fernsteuereinrichtung übertragen und von der dort vorgesehenen Anzeigeeinheit wiedergegeben wird.

Alternativ oder zusätzlich zu einer Video- oder Fernsehkamera kann auch mit anderen bildgebenden Sensoren gearbeitet werden, beispielsweise einem Infrarotsensor und/oder einem Radarsensor und/oder einem Fotomischdetektor und/oder einem Lichtlaufzeitsensor im Sinne eines sog. Time-of-Flight-Detektors, bei dem Messobjekte von Lichtimpulsen angeleuchtet und die Signallaufzeit gemessen wird, aufgrund derer dann die Entfernung zwischen Kamera und Objekt errechnet und ein dreidimensionales Bild erzeugt werden kann. Vorteilhafterweise können auch mehrere bildgebende Sensoren unterschiedlicher Bildgattung, beispielsweise eine Kamera in Verbindung mit einem Infrarotsensor verwendet werden, wobei deren Bilder überlagert und in einem gemeinsamen Bild angezeigt werden können, beispielsweise dergestalt, dass in das Kamerabild die warmen Partien eines Infrarotbildes, die beispielsweise Personen anzeigen können, eingeblendet werden. Die Verwendung einer Video- und/oder Fernsehkamera ist jedoch insofern vorteilhaft, als ein realitätsnahes Bild erzeugt wird, das dem Maschinenführer das Gefühl vermittelt, mit eigenen Augen zu sehen.

Eine solche Kamera bzw. bildgebende Sensorik zum Darstellen der Maschinenumgebung bzw. des Arbeitswerkzeugs der ferngesteuerten Maschine kann beispielsweise an der Maschine selbst fest oder verschwenkbar angebracht sein, beispielsweise an der Kranführerkabine eines Krans und/oder an der Laufkatze eines Turmdrehkrans oder an anderer geeigneter Stelle, wobei die Kamera vorteilhafterweise derart ausgerichtet ist, dass das Arbeitswerkzeug, beispielsweise der Lasthaken eines Krans, beobachtet werden kann. Vorteilhafterweise können hierbei auch mehrere Kameras vorgesehen sein, um das Arbeitswerkzeug aus verschiedenen Perspektiven betrachten zu können.

In vorteilhafter Weiterbildung der Erfindung kann auch eine verfahrbare und/oder an verschiedene Orte bewegbare Kamera eingesetzt werden, die es erlaubt, das Arbeitswerkzeug und/oder die Maschinenumgebung aus verschiedene Blickrichtungen darzustellen.

In Weiterbildung der Erfindung kann insbesondere auch eine Kamera eingesetzt werden, die an einer Flugdrohne montiert ist. Es wird also vorgeschlagen, eine ferngesteuerte, mit einer Kamera ausgerüstete Flugdrohne zu verwenden, mittels derer das gewünschte Kamerabild des Arbeitswerkzeugs und/oder der Werkzeugumgebung aus verschiedenen Blickrichtungen bereitgestellt werden kann. Insbesondere kann mittels einer solchen Flugdrohne auch ein perspektivisches Kamerabild des Arbeitswerkzeugs und dessen Umgebung aus schrägen Blickachsen bereitgestellt werden, die von einem Punkt beabstandet von der Maschine und dessen Führerstand und oberhalb des Bodens gewonnen werden können, so dass dem Maschinenführer das Arbeitswerkzeug und dessen Umgebung aus einer Blickrichtung visualisiert werden kann, wie sie auch ein externer Betrachter sehen würde. Bei einem Kran können beispielsweise Kamerabilder des Lasthakens und dessen Umgebung bereitgestellt werden, die von der Seite her schräg oder senkrecht auf die vertikale Kranmittelebene durch den Ausleger schauen. Auch aus Drohnenpositionen, die in dieser durch den Ausleger gehenden, vertikalen Kranmittelebene liegen, können Bilder des Lasthakens bereitgestellt werden. Durch solche perspektivischen Kamerabilder aus verschiedenen Blickachsen können die Relativpositionen zwischen Arbeitswerkzeug und dessen Umgebung bzw. einem Zielpunkt sehr viel besser visualisiert werden.

Um eine einfache Bedienung der Flugdrohne zu ermöglichen, kann in Weiterbildung der Erfindung die Flugdrohne in Abhängigkeit einer Maschinenstellung und/oder Arbeitswerkzeugposition angesteuert werden derart, dass die Flugdrohne Maschinen-, insbesondere Arbeitswerkzeugbewegungen automatisch folgt und eine gewünschte Position relativ zu der Maschine und/oder deren Arbeitswerkzeug auch bei Maschinenbewegungen, insbesondere Arbeitswerkzeugbewegungen zumindest näherungsweise hält bzw. zu halten versucht und nachfährt. Wird die Flugdrohne beispielsweise in Verbindung mit einem Kran verwendet, kann die Flugdrohne bei aktiviertem, automatischem Folgemodus dem Lasthaken des Krans automatisch folgen. Wird beispielsweise eine Relativposition der Flugdrohne etwa auf Lasthakenhöhe bzw. ein Stück weit oberhalb mit seitlicher Beabstandung zur vertikalen Kranmittelebene durch den Ausleger gewünscht und eingestellt, kann die Flugdrohne ihre Flughöhe automatisch erniedrigen oder erhöhen, wenn der Lasthaken abgesenkt oder angehoben wird, und/oder parallel zur vertikalen Kranmittelebene vor- oder zurückfliegen, wenn die Laufkatze des Krans verfahren wird und/oder seitlich quer nach links oder rechts fliegen, wenn der Kran verdreht wird.

Vorteilhafterweise kann die Flugdrohne jedoch auch autonom ferngesteuert werden derart, dass von der Flugdrohne verschiedene gewünschte Positionen relativ zu der Maschine und/oder deren Arbeitswerkzeug frei angeflogen werden können. Dies kann beispielsweise durch Eingeben einer Wunschposition für die Flugdrohne relativ zum Lasthaken bzw. dem Arbeitswerkzeug erfolgen, beispielsweise dergestalt, dass in einem Positionssteuerungsmodul, das in dem Steuerstand der Fernsteuereinrichtung vorgesehen sein kann, eine Position in Bezug auf den Lasthaken eingegeben wird, beispielsweise in Form "2 m oberhalb seitlich rechts vom Lasthaken". Alternativ oder zusätzlich kann jedoch die Flugdrohne auch gänzlich frei gegenüber der Maschine und deren Arbeitswerkzeug verflogen werden, beispielsweise mit Hilfe eines Joysticks, um die Flugdrohne so lange zu verfliegen, bis die Kameraposition und deren Blickwinkel auf das Arbeitswerkzeug und dessen Umgebung dem Kranführer bzw. Maschinenführer zusagt.

Um das Realitätsempfinden des Nutzers des Fernsteuer-Einrichtungs weiter zu erhöhen, ist nach einem weiteren Aspekt vorgesehen, dass auf der Anzeigevorrichtung die von der Kamera und/oder dem grafischen Simulationsmodul bereitgestellten Darstellungen der Umgebung der ferngesteuerten Maschine mit Livebildern aus dem Steuerstand, die beispielsweise Bewegungen des Fernsteuer-Einrichtung-Nutzers zeigen können, überlagert werden. Insbesondere können auf der Anzeigevorrichtung einerseits die echten oder virtuellen Darstellungen der Maschinenumgebung und/oder der darin sichtbaren Maschinenkomponenten und andererseits am Steuerstand aufgenommene Livebilder einer Livekamera gleichzeitig und überlagert dargestellt werden. Eine solche Überlagerung von Bildern aus der Simulationswelt und Livebildern gibt dem Fernsteuer-Einrichtungnutzer ein besonders starkes Gefühl der Realitätsnähe.

Vorteilhafterweise kann hierzu als Anzeigevorrichtung eine am Kopf tragbare, insbesondere brillenartig ausgebildete Anzeigevorrichtung beispielsweise in Form einer Virtual-Reality-Brille und eine vorteilhafterweise ebenfalls am Kopf tragbare, beispielsweise als Helmkamera ausgeführte oder in die genannte Virtual-Reality-Brille integrierte Kamera Verwendung finden, die die genannten Livebilder bereitstellt, die zusammen mit der künstlich generierten, virtuellen Darstellung auf der Anzeigevorrichtung, insbesondere der Virtual-Reality-Brille, dargestellt werden.

Die genannte Kamera für die Bereitstellung der Livebilder vom Steuerstand kann vorteilhafterweise eine Stereoskopkamera sein, die stereoskopische Bilder vorzugsweise in zumindest näherungsweise mit der Blickrichtung des Augenpaars eines Nutzers übereinstimmender Kamerablickrichtung bereitstellt, welche an entsprechender Stelle der Anzeigevorrichtung, insbesondere der Virtual-Reality-Brille eingeblendet werden können. Hierdurch kann ein besonders realitätsnahes Nutzerempfinden erreicht werden.

Alternativ oder zusätzlich kann auch eine 360°-Kamera Verwendung finden, deren Bilder der Umgebung für den Kranfahrer beispielsweise in der genannten Virtual Reality-Brille zur Verfügung gestellt werden können. Durch eine solche 360°-Kamera vereinfacht sich auch der Aufbau des bildgebenden Systems, insbesondere kann das Kamerabild der Kopfbewegung des Trägers der Virtual Reality-Brille relativ einfach folgen, wodurch eine aufwändige Fernsteuerung der Kamera vermieden werden kann.

Grundsätzlich wäre es aber auch möglich, Bilder von der ferngesteuerten Maschine und die genannten Livebilder vom Steuerstand auf einem an sich herkömmlichen Bildschirm zu überlagern, wobei hier beispielsweise ein Nutzer eine Livebildkamera am Kopf tragen könnte, die zumindest näherungsweise der Blickrichtung des Nutzers entsprechende Bilder bereitstellt, so dass auf der Anzeigevorrichtung beispielsweise in Form mehrerer Bildschirme dann auch ein live aufgenommener Benutzerarm bzw. der live aufgenommene Teil des Steuerstands eingeblendet werden kann. Eine realitätsnähere und damit eindrücklicher aufnehmbare Simulation kann jedoch durch Überlagerung auf den Sichtflächen einer Virtual Reality Brille erreicht werden.

Die Überlagerungseinrichtung zum Überlagern der Livebilder der Steuerstand-Kamera mit der Darstellung der Umgebung der ferngesteuerten Maschine kann vorteilhafterweise nach der sog. Green-Screen-Technik arbeitend ausgebildet sein, wobei die Überlagerungseinrichtung in dem Livebild Farbflächen einer vorbestimmten Farbe erkennt und diese Bildbereiche dann durch die virtuelle Darstellung aus dem Simulationsmodul ersetzt. Hierzu kann vorteilhafterweise der Steuerstand eine Führerkabinenwandung umfassen, in der Fensterbereiche - beispielsweise entsprechend den Sichtfenstern einer echten Kranführerkabine - in einer Schlüsselfarbe eingefärbt sind, die sich von den restlichen Farben der übrigen im Kamerablickfeld liegenden Komponenten wie beispielsweise der Farbe der Fenstereinrahmungen, der Eingabemittel und der Bediener-Bekleidung sowie - Hautfarbe möglichst deutlich unterscheidet, so dass das im Steuerstand aufgenommene Livebild die genannten eingefärbten Flächen in einer bestimmten Farbwiedergabe zeigt, während alle anderen Bildflächen in anderen Farben gezeigt sind. Die in der genannten Schlüsselfarbe - beispielsweise grün - gefärbten Livebildflächen bzw. -teilflächen werden dann durch die echte oder virtuelle Darstellung der Maschinenumgebung und/oder der darin sichtbaren Maschinenkomponenten ersetzt, so dass das überlagerte Bild bzw. die überlagerte Darstellung einerseits den Steuerstand des Fernsteuer-Einrichtungs, dessen Komponenten und sich im Sichtfeld der Livekamera befindliche Körperglieder des Nutzers in echt als Livebild zeigt und andererseits in den von der Livekamera aufgenommenen Fensterbereichen der Führerkabinenwandung die kameragenerierte echte oder virtuelle Darstellung der Maschinenumgebung und der darin sichtbaren Maschinenkomponenten zeigt.

Die genannte virtuelle Darstellung der Maschinenumgebung kann von dem grafischen Simulationsmodul vorteilhafterweise verändert und in Abhängigkeit von verschiedenen Datensätzen, die über eine Schnittstelle in das Simulationsmodul einspielbar sind, verschiedenen Szenarien angepasst werden. Insbesondere können Planungsdaten wie CAD-Daten eines herzustellenden Bauwerks und/oder Baustellen-Istdaten, die je nach Baufortschritt den Istzustand eines entstehenden Gebäudes oder Bauwerks wiedergeben, über eine entsprechende Datenschnittstelle in das Simulationsmodul eingespielt werden und von dem Simulationsmodul dazu verwendet werden, die virtuelle Darstellung der Maschinenumgebung entsprechend dem eingespielten Datensatz, insbesondere in Abhängigkeit der eingespielten Planungsdaten und/oder Baustellen-Istdaten, zu generieren bzw. daran anzupassen.

Die genannten Baustellen- bzw. Bauwerksinformationen können in der vorgenannten Weise CAD-Daten oder andere Geometriedaten des Bauwerks oder der Baustelle sein, wobei ggf. auch digitale Bilddaten Verwendung finden können, die das tatsächliche Bauwerk und dessen Baufortschritt wiedergeben. Derartige Bilddaten können als Maschinenumgebungsdaten über die genannte CAD-Schnittstelle bzw. eine geignete Bilddaten-Schnittstelle in das grafische Simulationsmodul eingespielt werden, welches dann die virtuelle Darstellung an diese übernommenen CAD- und/oder Bilddaten anpasst.

Die Modellierung einer geplanten oder schon existierenden oder teilweise ausgeführten Baustelle und die entsprechende Generierung der virtuellen Darstellung der Maschinenumgebung durch das grafische Simulationsmodul ist insbesondere auch ein wertvolles Hilfsmittel, um die Logistik auf einer Baustelle sicherzustellen und auch bereits vor Baubeginn kritische Abläufe simulieren und einüben zu können.

Arbeitet die Bewegungsbestimmungseinrichtung in der vorgenannten Weise - auch - mit simulierten Daten, kann die Fernsteuer-Einrichtung vorteilhafterweise die für die Bewegungssimulation benötigten Bewegungsparameter nicht alle von einem Simulationsrechner berechnen lassen, sondern zumindest teilweise im Wege der Datenemulation unter Verwendung von sich tatsächlich bewegenden Hardwarekomponenten, die einen Bestandteil des Fernsteuer-Einrichtungs bilden können, bestimmen. Ein solches Datenemulationsmodul des Fernsteuer-Einrichtungs kann insbesondere Stellantriebskomponenten und/oder Leistungselektronikkomponenten umfassen, mittels derer tatsächlich Stellbewegungen ausgeführt werden, die die echten Kran- bzw. Maschinenbewegungen nachbilden und diese Bewegungen charakterisierende Daten bereitstellen, beispielsweise in Form von Sensorsignalen, die die Stellbewegungen der genannten Antriebskomponenten wiedergeben. Durch eine solche Datenemulation können Bewegungs- und/oder Positionsparameter, die dann für die Bewegungssimulation weiter verwendet werden können, deutlich schneller und unter geringerer Rechenleistung bereitgestellt werden, was eine realistischere Simulation in Echtzeit bzw. nahezu Echtzeit erlaubt.

Mittels einer solchen Datenemulation können insbesondere Zeitversatz und Datenübertragungsprobleme bei Kommunikationskanälen mit geringeren Bandbreiten vermieden werden, wie sie ansonsten auftreten würden, wenn sämtliche Bewegungen und/oder Verformungen der ferngesteuerten Maschine, die in Abhängigkeit der eingegebenen Steuerbefehle auftreten, an der echten Maschine erfasst und dann zurück auf den Steuerstand der Fernsteuereinrichtung übertragen werden müssen.

Um eine besonders schnelle, realistische Bestimmung von Bewegungen der Maschinenkomponenten in Abhängigkeit der am Steuerstand eingegebenen Steuerbefehle zu erreichen, kann nach einem weiteren Aspekt das genannte Bewegungsbestimmungsmodul als Hybrideinrichtung bzw. Hybridmodul ausgebildet sein, das einerseits einen Rechner zur Simulation von Bewegungs- und/oder Positionsparametern und andererseits den echten Kran- bzw. Maschinenstellantrieben zumindestens ähnliche Hardwarekomponenten wie Antriebseinheiten, Drehgeber oder Frequenzumrichter umfasst, mittels derer Stellbewegungen nachgebildet und Bewegungs- und/oder Positionsparameter bestimmt werden. Insbesondere werden "echte" Hardwarekomponenten verwendet, die auch im zu simulierenden Kran bzw. der zu simulierenden Maschine als Stellantriebs- und/oder Steuervorrichtungsbauteile verbaut sind.

Insbesondere kann das Bewegungsbestimmungsmodul den Schaltschrank oder zumindest einen Teil des Schaltschranks und dessen Komponenten umfassen, der auch in der zu simulierenden Maschine Verwendung findet und dort einen Teil der Maschinensteuerung bildet. Insbesondere kann die Leistungselektronik und/oder zumindest ein Teil der Leistungselektronik wie beispielsweise ein Frequenzumrichter verwendet werden, um die Stellbewegungen nachzubilden, die von Steuerbefehlseingaben am Steuerstand ausgelöst werden.

Ferner können in Weiterbildung der Erfindung Stellantriebseinheiten, beispielsweise in Form von Servomotoren Verwendung finden, die der Emulation der Stellantriebsbewegungen der zu simulierenden Maschine bzw. Maschinenkomponenten dienen. Vorteilhafterweise wird hier für eine jeweilige Stellantriebsachse eine Antriebseinheit beispielsweise in Form einer Servoantriebseinheit verwendet, die - insbesondere über den vorgenannten Frequenzumrichter - entsprechend einem Steuerbefehl angesteuert wird, und ferner vorteilhafterweise mit einer weiteren Antriebseinheit, beispielsweise in Form einer Servoantriebseinheit, gekuppelt werden kann, mittels derer ein Gegenmoment und/oder eine Gegenlast ausgeübt werden kann, um tatsächlich auftretende Lasten, Widerstände oder Trägheiten zu simulieren. Beispielsweise kann mittels der genannten zweiten Antriebseinheit eine Last simuliert werden, die einem Hubwerk entgegenwirkt, oder es kann ein Windmoment simuliert werden, das einem Drehwerksantrieb entgegenwirkt.

Die ggf. unter Berücksichtigung des aufgebrachten Gegenmoments oder der aufgebrachten Gegenlast ausgeführte Stellbewegung der erstgenannten Antriebseinheit kann von einer geeigneten Erfassungseinrichtung erfasst werden, wobei ein entsprechendes Erfassungssignal die tatsächlich erzielte Stellbewegung wiedergibt und als Sensorsignal in der weiteren Simulation verwendet werden kann, insbesondere um in der vorgenannten Weise Bewegungen und/oder Positionen und/oder Verformungen der Strukturteile zu bestimmen und/oder die virtuelle Darstellung der Maschinenumgebung und/oder der darin sichtbaren Maschinenkomponenten zu simulieren.

Vorteilhafterweise werden mehrere solcher Antriebseinheiten bzw. mehrere solcher Antriebseinheiten-Paare umfassend Antrieb und Gegenlast-Antrieb sowie eine jeweils zugeordnete Erfassungseinrichtung verwendet, um die verschiedenen Stellbewegungs-Achsen und die diesbezüglich ausgeführten Stellbewegungen des zu simulierenden Maschinenbetriebs bestimmen zu können.

Die Sensorwerte der Antriebseinheiten der Stellbewegungsachsen, die in Abhängigkeit der am Steuerstand eingegebenen Steuerbefehle betätigt und bewegt werden, werden also nach einem weiteren Aspekt nicht mittels eines Rechenmodells simuliert bzw. berechnet, sondern anhand von Hardwarekomponenten, die den echten Stellantriebskomponenten der zu simulierenden Maschine möglichst nahe kommen, emuliert bzw. nachgestellt und direkt als tatsächliche Sensorwerte ausgegeben.

Durch ein solches Daten-Emulationssystem kann das Bewegungsbestimmungsmodul Bewegungen und/oder Positionen der Maschinenkomponenten sehr viel schneller und mit geringerer Rechenleistung bestimmen, so dass die virtuelle Darstellung der Maschinenumgebung und/oder der Maschinenkomponenten und auch die damit einhergehenden Stellbewegungen des Maschinenstands sehr viel rascher und realitätsnaher erreicht werden können. Zudem können die generierten Sensorsignale am Steuerstand angezeigt und/oder für weitere Überwachungsmassnahmen wie Traglastüberwachung oder Arbeitsbereichs-Begrenzungen, die am Steuerstand angezeigt und/oder simuliert werden können, verwendet werden.

Wird der Fernsteuer-Einrichtung zum Fernsteuern eines Turmdrehkrans und dessen Betriebs verwendet, können die vorgenannten Antriebseinheiten-Paare zum Ausführen der entsprechenden Stellbewegungen und Bereitstellen des entsprechenden Gegenmoments bzw. Gegenlast insbesondere dem Turmdrehwerk - bzw. bei einem Obendreher dem Auslegerdrehwerk -, dem Hubwerk und dem Katzfahrwerk entsprechen.

Die Erfindung wird nachfolgend anhand eines bevorzugten Ausführungsbeispiels und zugehöriger Zeichnungen näher erläutert. **In** den Zeichnungen zeigen:
- Fig. 1:: eine schematische Darstellung eines ferngesteuerten Krans in Form eines Turmdrehkrans, dessen Lasthaken eine Last im nicht einsehbaren Bereich hinter einem Gebäude manövriert, wobei eine Flugdrohne mit einer Kamera den Lasthaken beobachtet, um ein entsprechendes Kamerabild an den Steuerstand der Fernsteuereinrichtung zu übertragen, und
- Fig. 2:: eine schematische Darstellung der Komponenten einer Fernsteuer-Einrichtung mit einem Steuerstand für den Bediener nach einer vorteilhaften Ausführung der Erfindung.

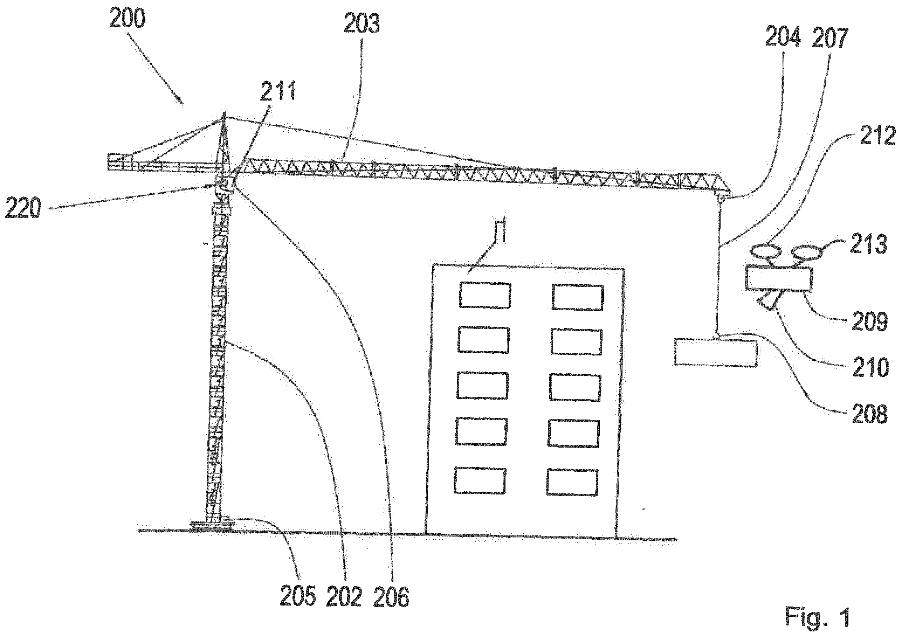

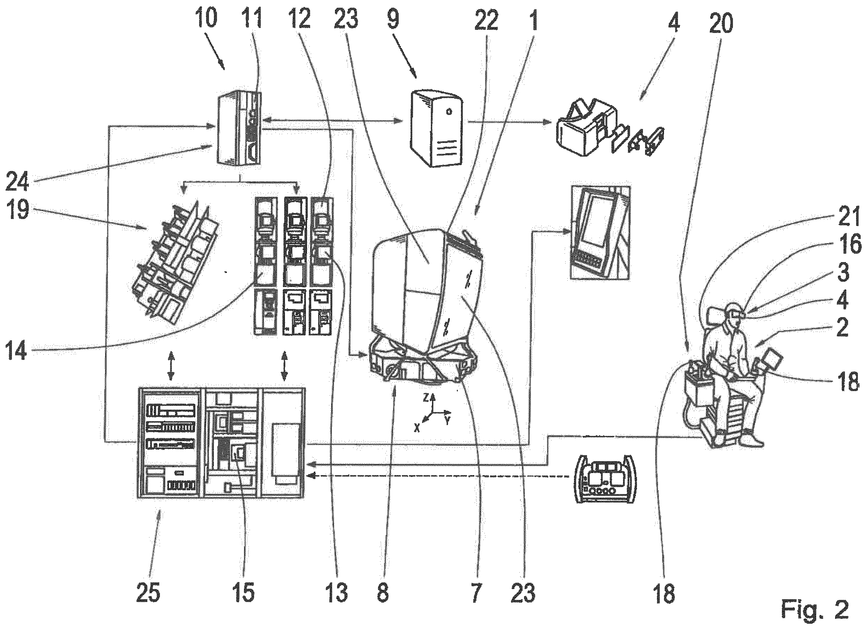

Wie Fig. 1 und 2 zeigen, kann die Fernsteuer-Einrichtung 1 als Kran-Fernsteuerung ausgebildet sein, die einen Steuerstand 2 in Form einer Kranführerkabine umfasst, die im Wesentlichen einer "echten" Kranführerkabine, wie sie an einem Kran, beispielsweise einem Turmdrehkran, einem Hafenkran oder einem Maritimkran oder Mobil-Teleskopkran Verwendung finden kann.

Der Kran 200 kann hierbei als Turmdrehkran ausgebildet sein, dessen Turm 202 einen Ausleger 203 trägt, an dem eine Laufkatze 204 verfahrbar gelagert ist. Der Ausleger 203 kann zusammen mit dem Turm 202 oder auch ohne den Turm 202 - je nach Ausbildung des Krans als Oben- oder Untendreher - um eine aufrechte Achse verdreht werden, wozu ein Drehwerksantrieb vorgesehen ist. Der Ausleger 203 könnte ggf. auch auf- und niederwippbar um eine liegende Querachse ausgebildet sein, wobei ein geeigneter Wippantrieb beispielsweise im Zusammenspiel mit der Auslegerabspannung vorgesehen sein könnte. Die genannte Laufkatze 204 kann mittels einer Katzfahrwinde oder eines anderen Katzfahrantriebs verfahren werden.

Der genannte Steuerstand 2 kann hierbei in an sich bekannter Weise einen Bedienersitzplatz 21 beispielsweise in Form eines Bedienersessels 20 umfassen, um den herum diverse Eingabemittel 18 zum Eingeben von Steuerbefehlen angeordnet sind. Die genannten Eingabemittel 18 können beispielsweise einen Joystick, ein Touchscreen, Steuerhebel, Eingabetasten und -schalter, Drehregler, Schieberegler und Ähnliches aufweisen.

Der Bedienerplatz ist hierbei von einer Führerstandwandung 22 umgeben, die einer Kabineneinhausung entsprechen kann und Fensterbereiche 23 aufweisen kann, die bei echten Kranführerkabinen verglast sind, im vorliegenden Fall jedoch in einer bestimmten Farbe eingefärbt, beispielsweise mit einer grünen Folie beschichtet sind, um mittels Green-Screen-Technik eine echte, kameragenerierte oder virtuelle Maschinenumgebung einblenden zu können, wie noch erläutert wird.

Der Steuerstand 2 ist auf einer Bewegungsplattform 7 montiert, mittels derer der Steuerstand 2 mehrachsig beweglich ist. Die Bewegungsplattform 7 ist dabei vorteilhafterweise mehrachsig beweglich ausgebildet, insbesondere um alle drei Raumachsen x, y und z verkipp- bzw. verdrehbar und entlang dieser Achsen translatorisch verschieblich.

Den Bewegungsachsen x, y und z der Bewegungsplattform 7 sind dabei Aktoren einer Antriebsvorrichtung 8 zugeordnet, beispielsweise in Form von Elektromotoren und/oder Hydraulikzylindern und/oder Hydraulikmotoren, um den Steuerstand 2 um die bzw. entlang der genannten Achsen bewegen zu können.

Die Antriebsvorrichtung 8 wird dabei von einer Bewegungssteuervorrichtung 24 angesteuert, die beispielsweise durch einen Industrie-PC realisiert sein kann.

Die genannte Bewegungssteuervorrichtung 24 kann dabei insbesondere Teil eines Bewegungsbestimmungsmoduls 10 sein, mittels dessen Kranbewegungen und/oder Positionen und/oder Ausrichtungen von Krankomponenten wie beispielsweise des Auslegers oder des Turms und auch Verwindungen von Strukturbauteilen wie des Auslegers oder des Turms in Abhängigkeit der jeweils am Steuerstand 2 eingegebenen Steuerbefehle bestimmt werden können. Das genannte Bewegungsbestimmungsmodul 10 bestimmt sozusagen die Auswirkungen der eingegebenen Steuerbefehle auf den zu steuernden Kran, d.h. welche Bewegungen, Positionen, Ausrichtungen und Verwindungen der Krankomponenten sich infolge eingegebener Steuerbefehle sich am zu steuernden Kran ergeben würden und gibt entsprechende, die genannten Größen charakterisierende Bewegungssignale aus.

Das genannte Bewegungsbestimmungsmodul 10 bestimmt die genannten Bewegungsgrößen hierbei nicht bzw. nicht vollständig durch Berechnung anhand eines Rechenmodells, sondern greift auf tatsächliche Hardwarekomponenten in Form von Antriebs- und Steuerungskomponenten zurück, die tatsächliche Bewegungen ausführen und den entsprechenden Hardwarekomponenten an einem echten Kran nachgebildet sind.

Wie die Figur 2 zeigt, umfasst das Bewegungsbestimmungsmodul 10 zumindest die wesentlichen Komponenten einer Kransteuerung 25, wie diese beispielsweise im Schaltschrank eines Krans realisiert sein kann. Insbesondere umfasst die genannte Kransteuerung 25 die Frequenzumrichter 15 verschiedener Kranantriebe, beispielsweise des Drehwerks, des Katzfahrwerks und des Hubwerks. Die genannte Kransteuerung 25 kann ggf. weitere Steuerungs- und/oder Leistungselektronikbauteile umfassen, insbesondere Lastüberwachungskomponenten, Arbeitsbereichs-Beschränkungskomponenten etc.

Die Kransteuerung 25 ist mit dem Steuerstand 2 und dessen Eingabemitteln 18 kommunikativ verbunden, so dass die Kransteuerung 25 die eingegebenen Steuerbefehle weiter verarbeiten kann, wobei insbesondere die Frequenzumrichter 15 in Abhängigkeit der eingegebenen Steuerbefehle Antriebseinheiten 12 beispielsweise in Form von Servoantrieben ansteuern. Die am Steuerstand 2 eingegebenen Steuerbefehle werden also in reale Bewegungen bzw. Antriebsmomente und -kräfte der Antriebseinheiten 12 umgesetzt.

Die genannten Antriebseinheiten 12 sind hierbei mit Gegenantriebseinheiten 14 kuppelbar, über die auf die Antriebseinheiten 12 Bewegungswiderstände aufgeschaltet werden können, um echten Widerständen wie Hublasten, Windkräfte, Trägheiten oder dynamische Belastungen nachbilden zu können. Die genannten Gegenantriebseinheiten 14 können von dem vorgenannten Industrie-PC angesteuert werden, der auch die Bewegungssteuervorrichtung 24 realisiert. Die Ansteuerung der Gegenantriebseinheiten 14 kann hierbei anhand verschiedener Vorgaben oder Programme erfolgen, beispielsweise durch vorgebbare Hublasten, vorgebbare Windprogramme oder anhand von vorbestimmten Funktionen oder Tabellen wie Dynamikreaktionen beim Abbremsen des Katzfahrwerks oder der Drehbewegung. Hierzu können in einem Speicherbaustein der Steuervorrichtung zum Ansteuern der Gegenantriebseinheiten 14 entsprechende Modelle, Tabellen bzw. Funktionen abgespeichert sein.

Wie die Figur 2 andeutet, sind den Antriebseinheiten 12 Erfassungseinrichtungen 13 beispielsweise in Form von Drehgebern oder anderen Positions- und/oder Bewegungssensoren zugeordnet, mittels derer Bewegungs- bzw. Stellungssignale bereitgestellt werden, die die Stellbewegungen der Antriebseinheiten 12 charakterisieren. Das Bewegungsbestimmungsmodul 10 stellt also echte Sensorsignale als Bewegungsparameter bereit, die einerseits am Steuerstand 2 angezeigt werden können und andererseits auch für weitergehende Simulationsfunktionen verwendet werden können. Insbesondere können in Abhängigkeit der genannten Bewegungssignale, die die Drehgeber bereitstellen, Strukturverwindungen wie Turmbiegungen, Auslegerbiegungen und ähnliche Verformungen anhand eines Rechenmodells bestimmt werden und die Antriebsvorrichtung 8 der Bewegungsplattform 7 zum Bewegen des Steuerstands 2 angesteuert werden sowie die virtuelle Darstellung der Kranumgebung generiert werden, jeweils in Abhängigkeit der genannten, real erzeugten Sensorsignale.

Wie Fig. 2 zeigt, kann das Bewegungsbestimmungsmodul 10 eine Rechnereinheit 11 umfassen, die wiederum von dem vorgenannten Industrie-PC realisiert sein kann, mittels welcher Rechnereinheit 11 in Abhängigkeit der am Steuerstand 2 eingegebenen Steuerbefehle und/oder der emulierten Daten, die durch die Datenemulationseinrichtung 19 bzw. der den Antriebseinheiten 12 zugeordneten Erfassungseinrichtung 13 erzeugten Sensorsignale generiert werden, Strukturverwindungen bestimmt werden, insbesondere Biegungen und Torsion im Kranturm und im Kranausleger, wobei die Rechnereinheit 11 hierzu ein die Struktursteifigkeiten berücksichtendes Rechenmodell verwendet, wie eingangs erläutert.

Alternativ oder zusätzlich zu diesen emulierten Bewegungsdaten kann die Bewegungsbestimmung aber auch "echte" Bewegungen und/oder Verformungen des ferngesteuerten Krans mittels einer geeigneten Sensorik erfassen und per Datenfernübertragung auf den Steuerstand 2 übertragen, um dann anhand dieser echten Kranreaktionen bestimmte Funktionen des Steuerstands 2 der Fernsteuereinrichtung zu steuern.

Anhand der genannten, emulierten und/oder erfassten, echten Bewegungsdaten sowie der hieraus bestimmten Verformungsdaten steuert die Bewegungssteuervorrichtung 24 die Antriebsvorrichtung 8 der Bewegungsplattform 7 an, um den Steuerstand 2 zu bewegen und echte Kranführerkabinen-Bewegungen nachzubilden, die bei Eingabe entsprechender Steuerbefehle in einem echten Kran auftreten würden.

Zum anderen werden die genannten Bewegungsdaten und ggf. auch die genannten Verformungsdaten verwendet, um Kranreaktionen in einer virtuellen Darstellung zu berücksichtigen, die von einem grafischen Simulationsmodul 9 generiert und auf einer Anzeigevorrichtung 3 angezeigt wird. Die genannte virtuelle Darstellung zeigt dabei insbesondere die Kranumgebung sowie darin sichtbare Krankomponenten wie beispielsweise den Kranausleger und den Lasthaken und kann im Wesentlichen dem Bild entsprechen, welches ein Kranführer aus der Kranführerkabine sehen würde. Die genannte virtuelle Darstellung kann hierbei in Form eines foto- oder filmähnlichen Digitalbilds, beispielsweise einer Pixeldarstellung in mehreren Farben entsprechen. Alternativ kann aber auch eine vereinfachte grafische Darstellung vorgesehen sein, wenngleich ein möglichst realistisches, foto- oder filmähnliches Darstellungsbild bevorzugt ist.

Alternativ oder zusätzlich zu einer solchen virtuellen Darstellung kann jedoch am Steuerstand 2 auch eine echte, kameragenerierte Darstellung der Kranumgebung und/oder des Lasthakens verwendet werden. Hierzu kann am Kran 200 zumindest eine Kamera montiert sein, deren Livebilder an den Steuerstand 2 übertragen werden. Eine solche Kamera 220 kann beispielsweise an der Kranführerkabine 206 des ferngesteuerten Krans 200 montiert sein und vorteilhafterweise zumindest näherungsweise eine Blickachse haben, die der Blickachse eines Kranführers in der Kranführerkabine 206 entspricht und/oder von der Kranführerkabine 206 zum Lasthaken hin geht.

Alternativ oder zusätzlich können aber auch andere Kameras und/oder Darstellungen aus anderen Perspektiven aufgenommen und an den Steuerstand übertragen werden, um dort angezeigt zu werden. Insbesondere kann eine Flugdrohne 209 verwendet werden, die mit zumindest einer Kamera ausgerüstet ist und ferngesteuert relativ zum Kran 200 bewegt werden kann.

Um den Lasthaken 208, der mit einem von der Laufkatze 204 ablaufenden Hubseil 207 verbunden sein kann, oder eine daran aufgenommene Last bzw. die Umgebung des Lasthakens 208 auch dann sehen zu können, wenn sich der Lasthaken 208 außerhalb des Sichtbereichs der Kranführerkabine 206 bzw. des Kranführers befindet, beispielsweise wenn - wie Fig. 1 zeigt - die Last hinter einem Gebäude abzusetzen ist, ist die Flugdrohne 209 vorgesehen, an der zumindest eine Kamera 210 montiert ist, mittels derer ein Kamerabild vom Lasthaken 208 und/oder der Lasthakenumgebung bereitgestellt werden kann. Das genannte Kamerabild ist vorteilhafterweise ein Live- oder Echtzeitbild im Sinne eines Fernseh- oder Videobilds und wird von der Kamera 210 der Flugdrohne 209 drahtlos zu einer Anzeigeeinheit 211 und/oder der Steuervorrichtung 205 des Krans 201 übertragen, wobei die genannte Anzeigeeinheit 211 beispielsweise ein Maschinenführerdisplay nach Art eines Tablets oder eines Bildschirms oder eines Monitors sein kann, der in der Kranführerkabine 206 montiert sein kann. Wird in der zuvor genannten Weise ein Fernsteuerstand oder eine mobile Bedieneinheit zum Steuern des Krans 201 verwendet, kann die genannte Anzeigeeinheit 211 in dem Fernsteuerstand oder an der mobilen Bedieneinheit vorgesehen sein.

Die Flugdrohne 209 ist mit einer Fernsteuereinrichtung 212 versehen, die es erlaubt, die Flugdrohne 209 fernzusteuern, insbesondere die Flugsteueraggregate wie beispielsweise Rotorblätter anzusteuern, um die Flugposition der Flugdrohne 209 fernzusteuern und/oder die Kamera 210 fernzusteuern, insbesondere hinsichtlich des Schwenkwinkels bzw. der Blickachse der Kamera 210 relativ zu dem Korpus der Flugdrohne 209 und/oder der Brennweite der Kamera 210.

Ein entsprechendes Fernsteuermodul kann in der Kranführerkabine 206 und/oder dem Fernsteuerstand oder der mobilen Bedieneinheit vorgesehen sein, beispielsweise mit entsprechenden Joysticks ausgestattet sein. Um eine einfache Bedienung zu ermöglichen, kann jedoch auch eine Sprachsteuerung und/oder eine Menüsteuerung für die Flugdrohne 209 vorgesehen sein, beispielsweise um aus mehreren vorbestimmten Relativpositionen der Flugdrohne 209 relativ zum Kran eine gewünschte Relativposition auszuwählen. Dies kann beispielsweise dadurch erfolgen, dass per Sprachsteuerung und/oder Menüsteuerung "Drohnenposition 1" eingegeben wird, die vorprogrammiert bzw. vorbestimmt in der Positionssteuervorrichtung 213 abgelegt sein kann.

Vorteilhafterweise wird die genannte echte oder virtuelle Darstellung der Kranumgebung und der darin sichtbaren Krankomponenten durch ein Livebild überlagert, welches reale Komponenten aus dem Steuerstand 2 zeigt, insbesondere vom Kopf des Fernsteuer-Einrichtungnutzers in dessen Blickrichtung aus sichtbare Bauteile wie die Eingabemittel 18, die Hände und den Unterarm des Nutzers und andere im Blickfeld liegende Komponenten.

Hierzu ist vorteilhafterweise eine Kamera 16 vorgesehen, die als am Kopf des Nutzers tragbare Kopfkamera ausgebildet sein kann und entsprechende Befestigungs- und/oder Haltemittel zum Befestigen am Kopf aufweisen kann, beispielsweise in Form einer Helmkamera. Ist die Anzeigevorrichtung 3 vorteilhafterweise in Form einer Virtual-Reality-Brille 4 ausgebildet, die der Nutzer trägt, kann die Kamera 16 in diese VR-Brille integriert sein.

Vorteilhafterweise ist die Kamera 16 dabei als Stereoskopkamera ausgebildet, um stereoskopische Bilder entsprechend den Blickachsen der beiden Augen des Nutzers bereitstellen zu können.

Die Überlagerungsvorrichtung 17 zum Überlagern der Darstellung der Kranumgebung und des Livebilds der Kamera 16 vom Steuerstand 2 kann hierbei insbesondere ein farbbasiertes Bildbearbeitungsmodul 26 umfassen, das nach der sog. Green-Screen-Technik arbeiten kann. Insbesondere kann das genannte farbbasierte Bildbearbeitungsmodul 26 im Livebild der Kamera 16 Bildbereiche erkennen, die eine bestimmte, von den restlichen Bildteilflächen abweichende Farbe besitzen, und diese Bildbereiche dann durch die Darstellung aus dem Simulationsmodul 9 ersetzen.

Hierzu kann vorteilhafterweise der Steuerstand 2 eine Führerkabinenwandung 22 umfassen, in der Fensterbereiche 23 - beispielsweise entsprechend den Sichtfenstern einer echten Kranführerkabine - in einer Schlüsselfarbe eingefärbt sind, die sich von den restlichen Farben der übrigen im Kamerablickfeld liegenden Komponenten wie beispielsweise der Farbe der Fenstereinrahmungen, der Eingabemittel 18 und der Bediener-Bekleidung sowie -Hautfarbe möglichst deutlich unterscheidet, so dass das im Steuerstand 2 aufgenommene Livebild die genannten eingefärbten Flächen in einer bestimmten Farbwiedergabe zeigt, während alle anderen Bildflächen in anderen Farben gezeigt sind. Die in der genannten Schlüsselfarbe - beispielsweise grün - gefärbten Livebildflächen bzw. - teilflächen werden dann durch die Darstellung der Maschinenumgebung und/oder der darin sichtbaren Maschinenkomponenten ersetzt, die vom grafischen Simulationsmodul 9 generiert wird und/oder von einer am Kran angeordneten Kamera erzeugt wird, so dass das überlagerte Bild bzw. die überlagerte Darstellung einerseits den Steuerstand 2 der Fernsteuer-Einrichtung, dessen Komponenten und sich im Sichtfeld der Livekamera befindliche Körperglieder des Nutzers in echt als Livebild zeigt und andererseits in den von der Livekamera 16 aufgenommenen Fensterbereichen 23 der Führerkabinenwandung 22 die echte oder virtuelle Darstellung der Maschinenumgebung und der darin sichtbaren Maschinenkomponenten zeigt.

## Patentansprüche

1. Fernsteuer-Einrichtung für einen Kran, eine Baumaschine oder ein Flurförderzeug, mit einem Steuerstand (2), der zumindest ein Eingabemittel (18) zum Eingeben von Steuerbefehlen sowie eine Signalübertragungseinrichtung zum Übertragen der eingegebenen Steuerbefehle auf die Steuervorrichtung (25; 250) des Krans (200), der Baumaschine oder des Flurförderzeugs aufweist, wobei der Steuerstand (2) beweglich gelagert ist und eine Antriebsvorrichtung (8) zum Bewegen des Steuerstands (2) vorgesehen ist, einer Anzeigevorrichtung (3) zum Anzeigen einer Darstellung eines Arbeitswerkzeugs und/oder der Maschinenumgebung, sowie einem Bewegungsbestimmungsmodul (10) zum Bestimmen von Bewegungen und/oder Verformungen von Maschinenkomponenten wie Kranausleger oder Lasthaken in Abhängigkeit der eingegebenen Steuerbefehle, **dadurch gekennzeichnet, dass** das Bewegungsbestimmungsmodul (10) eine Bestimmungseinrichtung zum Bestimmen von Verformungen von Strukturbauteilen der zu simulierenden Maschine in Abhängigkeit von am Steuerstand (2) eingegebenen Steuerbefehlen aufweist, wobei die genannte Bestimmungseinrichtung eine Rechnereinheit (11) zum Berechnen der Verformungen anhand eines gespeicherten Verformungsmodells der Strukturbauteile aufweist, wobei eine Steuervorrichtung zum Ansteuern der Antriebsvorrichtung (8) in Abhängigkeit der von dem Bewegungsbestimmungsmodul (10) bestimmten Verformungen der Strukturbauteile vorgesehen ist, wobei ein Konfigurationsmodul zur wahlweisen Vorkonfiguration zur Fernsteuereinrichtung für einen aus mehreren Maschinentypen vorgesehen ist.

2. Fernsteuer-Einrichtung nach dem vorhergehenden Anspruch, wobei ein grafisches Simulationsmodul (9) zum Berechnen einer virtuellen Darstellung der Maschinenumgebung und/oder von aus dem Steuerstand (2) sichtbaren Maschinenkomponenten vorgesehen ist, wobei das grafische Simulationsmodul (9) zum Generieren der virtuellen Darstellung in Abhängigkeit der berechneten Verformungen der Strukturbauteile ausgebildet ist.

3. Fernsteuer-Einrichtung nach einem der vorhergehenden Ansprüche, wobei der Steuerstand (2) mehrachsig beweglich, vorzugsweise auf einer Bewegungsplattform (7), in die die Antriebsvorrichtung (8) integriert ist, gelagert ist und die Antriebsvorrichtung (8) mehrere Bewegungsachsen (x, y, z), vorzugsweise umfassend mehrere rotatorische Bewegungsachsen und/oder mehrere translatorische Bewegungsachsen, aufweist, die in Abhängigkeit von am Steuerstand (2) eingegebenen Steuerbefehlen betätigbar sind.

4. Fernsteuer-Einrichtung nach einem der vorhergehenden Ansprüche, wobei zumindest eine Kamera (210) zum Bereitstellen eines Livebilds des Arbeitswerkzeugs und/oder der Maschinenumgebung vorgesehen ist und der Steuerstand (2) zumindest einen Bildempfänger zum Empfangen des Livebilds der Kamera (210) aufweist, welches Livebild der auf der Anzeigeeinrichtung (3) angezeigten Darstellung zugrunde liegt.

5. Fernsteuer-Einrichtung nach Anspruch 4, wobei die zumindest eine Kamera (210) an einer ferngesteuerten Flugdrohne (209) montiert ist, wobei (a) eine Positionssteuervorrichtung (13) zum Positionssteuern der Flugdrohne (209) ein automatisches Folgesteuermodul zum Ansteuern der Flugdrohne (209) in Abhängigkeit einer Maschinenstellung und/oder einer Arbeitswerkzeugposition derart, dass die Flugdrohne (209) Maschinen-, insbesondere Arbeitswerkzeugbewegungen automatisch folgt und eine gewünschte Position relativ zur Maschine und/oder deren Arbeitswerkzeug auch bei Maschinen-, insbesondere Arbeitswerkzeugbewegungen hält, aufweist und/oder (b) eine/die Positionssteuervorrichtung (13) ein autonomes Steuermodul zum autonomen Fernsteuern der Flugdrohne (209) derart, dass von der Flugdrohne (209) verschiedene gewünschte Positionen relativ zur Maschine und/oder deren Arbeitswerkzeug angeflogen werden, aufweist.

6. Fernsteuer-Einrichtung nach einem der vorhergehenden Ansprüche 4 bis 5, wobei zumindest eine Kamera (110) zum Bereitstellen eines Livebilds der Maschinenumgebung am Kran (200), an der Baumaschine oder am Flurförderzeug montiert ist, insbesondere an einer Führerkabine (206) mit einer Blickrichtung zumindest näherungsweise auf das Arbeitswerkzeug.

7. Fernsteuer-Einrichtung nach einem der vorhergehenden Ansprüche, wobei der Steuerstand (2) eine Führerhauswandung umfasst, in der Sichtfenster ausgebildet sind, wobei die genannten Sichtfenster in einer bestimmten Farbe eingefärbt sind, wobei das grafische Simulationsmodul (9) und/oder die Überlagerungseinrichtung (17) eine farbsensitive Einblendeeinheit zum Einblenden der Darstellung der Maschinenumgebung in die Bildflächen des von der Kamera (16) bereitgestellten Livebilds, die in der vorgenannten, bestimmten Farbe eingefärbt sind, aufweist.

8. 44 . Fernsteuer-Einrichtung nach einem der vorhergehenden Ansprüche, wobei das Konfigurationsmodul einen Konfigurationsbaustein zum Anpassen der Eingabemittel des Steuerstands (2) an den ausgewählten Maschinentyp und/oder einen Konfigurationsbaustein zum Anpassen von Parametern des Bewegungsbestimmungsmoduls (10) an den jeweils ausgewählten Maschinentyp aufweist.

9. Fernsteuer-Einrichtung nach einem der vorhergehenden Ansprüche, wobei das grafische Simulationsmodul (9) eine Datenschnittstelle zum Einspielen von Bauwerks- und/oder Baustellendaten aufweist und eine Bildverarbeitungseinrichtung zum Generieren und/oder Anpassen der virtuellen Darstellung der Maschinenumgebung in Abhängigkeit der eingespielten Baustellen- und/oder Bauwerksdaten aufweist.

10. Fernsteuer-Einrichtung nach Anspruch 9, wobei die genannte Datenschnittstelle eine CAD-Schnittstelle ist und die Bildverarbeitungseinrichtung zum Generieren und/oder Anpassen der virtuellen Darstellung der Maschinenumgebung in Abhängigkeit der über die CAD-Schnittstelle eingespielten CAD-Daten ausgebildet ist, und/oder eine Bilddaten-Schnittstelle ist und die Bildverarbeitungseinrichtung zum Generieren und/oder Anpassen der virtuellen Darstellung der Maschinenumgebung in Abhängigkeit der über die Bilddaten-Schnittstelle eingespielten, vorzugsweise digitalen Bilddaten ausgebildet ist.

11. System umfassend eine Fernsteuer-Einrichtung (1), die gemäß einem der Ansprüche 1-10 ausgebildet ist, sowie einen Kran, eine Baumaschine oder ein Flurförderzeug, wobei zwischen dem Kran, der Baumaschine und/oder dem Flurförderzeug einerseits und dem Fernsteuer-Einrichtung (1) andererseits eine Kommunikationsverbindung vorgesehen ist, über die am Steuerstand (2) des Fernsteuer-Einrichtungs (1) eingegebene Steuerbefehle an die Steuereinrichtung des Krans, der Baumaschine und/oder des Flurförderzeugs übertragbar sind.

## Claims

1. Remote-control device for a crane, a construction machine or an industrial truck, comprising a control station (2) which has at least one input means (18) for inputting control commands as well as a signal transmission device for transmitting the input control commands to the control device (25; 250) of the crane (200), the construction machine or the industrial truck, wherein the control station (2) is movably mounted and a drive device (8) for moving the control station (2) is provided, a display device (3) for displaying a representation of a working tool and/or of the machine environment, as well as a movement determination module (10) for determining movements and/or deformations of machine components such as a crane boom or load hook as a function of the input control commands, **characterized in that** the movement determination module (10) has a determination device for determining deformations of structural components of the machine to be simulated as a function of control commands input at the control station (2), wherein said determination device has a computer unit (11) for calculating the deformations on the basis of a stored deformation model of the structural components, wherein a control device for actuating the drive device (8) as a function of the deformations of the structural components determined by the movement determination module (10) is provided, wherein a configuration module for the selective pre-configuration of the remote-control device for one of several machine types is provided.

2. Remote-control device according to the preceding claim, wherein a graphical simulation module (9) for calculating a virtual representation of the machine environment and/or of machine components visible from the control station (2) is provided, wherein the graphical simulation module (9) is configured for generating the virtual representation as a function of the calculated deformations of the structural components.

3. Remote-control device according to one of the preceding claims, wherein the control station (2) is mounted so as to be movable in multiple axes, preferably on a motion platform (7) into which the drive device (8) is integrated, and the drive device (8) has several movement axes (x, y, z), preferably comprising several rotational movement axes and/or several translational movement axes, which are actuatable as a function of control commands input at the control station (2).

4. Remote-control device according to one of the preceding claims, wherein at least one camera (210) for providing a live image of the working tool and/or of the machine environment is provided and the control station (2) has at least one image receiver for receiving the live image of the camera (210), which live image underlies the representation displayed on the display device (3).

5. Remote-control device according to claim 4, wherein the at least one camera (210) is mounted on a remote-controlled flying drone (209), wherein (a) a position control device (13) for position-controlling the flying drone (209) has an automatic follow-control module for actuating the flying drone (209) as a function of a machine position and/or a working-tool position in such a way that the flying drone (209) automatically follows machine movements, in particular working-tool movements, and maintains a desired position relative to the machine and/or its working tool even during machine movements, in particular working-tool movements, and/or (b) a/the position control device (13) has an autonomous control module for autonomously remote-controlling the flying drone (209) in such a way that various desired positions relative to the machine and/or its working tool are approached by the flying drone (209).

6. Remote-control device according to one of the preceding claims 4 to 5, wherein at least one camera (110) for providing a live image of the machine environment is mounted on the crane (200), on the construction machine or on the industrial truck, in particular on a driver's cabin (206) with a viewing direction at least approximately onto the working tool.

7. Remote-control device according to one of the preceding claims, wherein the control station (2) comprises a driver's cab wall in which viewing windows are formed, wherein said viewing windows are colored in a specific color, wherein the graphical simulation module (9) and/or the superimposition device (17) has a color-sensitive insertion unit for inserting the representation of the machine environment into the image areas of the live image provided by the camera (16) that are colored in the aforementioned specific color.

8. Remote-control device according to one of the preceding claims, wherein the configuration module has a configuration component for adapting the input means of the control station (2) to the selected machine type and/or a configuration component for adapting parameters of the movement determination module (10) to the respectively selected machine type.

9. Remote-control device according to one of the preceding claims, wherein the graphical simulation module (9) has a data interface for importing structure data and/or construction-site data and has an image processing device for generating and/or adapting the virtual representation of the machine environment as a function of the imported construction-site data and/or structure data.

10. Remote-control device according to claim 9, wherein said data interface is a CAD interface and the image processing device is configured for generating and/or adapting the virtual representation of the machine environment as a function of the CAD data imported via the CAD interface, and/or is an image-data interface and the image processing device is configured for generating and/or adapting the virtual representation of the machine environment as a function of the preferably digital image data imported via the image-data interface.

11. System comprising a remote-control device (1) which is configured according to one of claims 1-10, as well as a crane, a construction machine or an industrial truck, wherein between the crane, the construction machine and/or the industrial truck on the one hand and the remote-control device (1) on the other hand a communication connection is provided, via which control commands input at the control station (2) of the remote-control device (1) are transmittable to the control device of the crane, the construction machine and/or the industrial truck.

## Revendications

1. Dispositif de commande à distance pour une grue, un engin de chantier ou un chariot de manutention, comprenant un poste de commande (2) qui présente au moins un moyen de saisie (18) pour saisir des ordres de commande ainsi qu'un dispositif de transmission de signaux pour transmettre les ordres de commande saisis au dispositif de commande (25 ; 250) de la grue (200), de l'engin de chantier ou du chariot de manutention, le poste de commande (2) étant monté de manière mobile et un dispositif d'entraînement (8) pour déplacer le poste de commande (2) étant prévu, un dispositif d'affichage (3) pour afficher une représentation d'un outil de travail et/ou de l'environnement de la machine, ainsi qu'un module de détermination de mouvements (10) pour déterminer des mouvements et/ou des déformations de composants de la machine tels que la flèche de grue ou le crochet de charge en fonction des ordres de commande saisis, **caractérisé en ce que** le module de détermination de mouvements (10) présente un dispositif de détermination pour déterminer des déformations de composants structurels de la machine à simuler en fonction des ordres de commande saisis au poste de commande (2), ledit dispositif de détermination présentant une unité de calcul (11) pour calculer les déformations à l'aide d'un modèle de déformation mémorisé des composants structurels, un dispositif de commande pour piloter le dispositif d'entraînement (8) en fonction des déformations des composants structurels déterminées par le module de détermination de mouvements (10) étant prévu, un module de configuration pour la préconfiguration sélective du dispositif de commande à distance pour l'un de plusieurs types de machine étant prévu.

2. Dispositif de commande à distance selon la revendication précédente, un module de simulation graphique (9) pour calculer une représentation virtuelle de l'environnement de la machine et/ou de composants de la machine visibles depuis le poste de commande (2) étant prévu, le module de simulation graphique (9) étant configuré pour générer la représentation virtuelle en fonction des déformations calculées des composants structurels.

3. Dispositif de commande à distance selon l'une des revendications précédentes, le poste de commande (2) étant monté de manière mobile selon plusieurs axes, de préférence sur une plateforme de mouvement (7) dans laquelle est intégré le dispositif d'entraînement (8), et le dispositif d'entraînement (8) présentant plusieurs axes de mouvement (x, y, z), comprenant de préférence plusieurs axes de mouvement rotatifs et/ou plusieurs axes de mouvement translatoires, qui sont actionnables en fonction des ordres de commande saisis au poste de commande (2).

4. Dispositif de commande à distance selon l'une des revendications précédentes, au moins une caméra (210) pour fournir une image en direct de l'outil de travail et/ou de l'environnement de la machine étant prévue et le poste de commande (2) présentant au moins un récepteur d'image pour recevoir l'image en direct de la caméra (210), laquelle image en direct est à la base de la représentation affichée sur le dispositif d'affichage (3).

5. Dispositif de commande à distance selon la revendication 4, l'au moins une caméra (210) étant montée sur un drone volant télécommandé (209), dans lequel (a) un dispositif de commande de position (13) pour commander la position du drone volant (209) présente un module de commande de suivi automatique pour piloter le drone volant (209) en fonction d'une position de machine et/ou d'une position d'outil de travail de telle sorte que le drone volant (209) suive automatiquement les mouvements de la machine, en particulier les mouvements de l'outil de travail, et maintienne une position souhaitée par rapport à la machine et/ou à son outil de travail même lors de mouvements de la machine, en particulier de mouvements de l'outil de travail, et/ou (b) un/le dispositif de commande de position (13) présente un module de commande autonome pour télécommander de manière autonome le drone volant (209) de telle sorte que différentes positions souhaitées par rapport à la machine et/ou à son outil de travail soient approchées par le drone volant (209).

6. Dispositif de commande à distance selon l'une des revendications précédentes 4 à 5, au moins une caméra (110) pour fournir une image en direct de l'environnement de la machine étant montée sur la grue (200), sur l'engin de chantier ou sur le chariot de manutention, en particulier sur une cabine de conduite (206) avec une direction de visée au moins approximativement sur l'outil de travail.

7. Dispositif de commande à distance selon l'une des revendications précédentes, le poste de commande (2) comprenant une paroi de cabine de conduite dans laquelle sont formées des fenêtres de vision, lesdites fenêtres de vision étant colorées dans une couleur déterminée, le module de simulation graphique (9) et/ou le dispositif de superposition (17) présentant une unité d'incrustation sensible à la couleur pour incruster la représentation de l'environnement de la machine dans les zones d'image de l'image en direct fournie par la caméra (16) qui sont colorées dans la couleur déterminée précitée.

8. Dispositif de commande à distance selon l'une des revendications précédentes, le module de configuration présentant un composant de configuration pour adapter les moyens de saisie du poste de commande (2) au type de machine sélectionné et/ou un composant de configuration pour adapter des paramètres du module de détermination de mouvements (10) au type de machine respectivement sélectionné.

9. Dispositif de commande à distance selon l'une des revendications précédentes, le module de simulation graphique (9) présentant une interface de données pour importer des données d'ouvrage et/ou des données de chantier et présentant un dispositif de traitement d'image pour générer et/ou adapter la représentation virtuelle de l'environnement de la machine en fonction des données de chantier et/ou des données d'ouvrage importées.

10. Dispositif de commande à distance selon la revendication 9, ladite interface de données étant une interface CAO et le dispositif de traitement d'image étant configuré pour générer et/ou adapter la représentation virtuelle de l'environnement de la machine en fonction des données CAO importées via l'interface CAO, et/ou étant une interface de données d'image et le dispositif de traitement d'image étant configuré pour générer et/ou adapter la représentation virtuelle de l'environnement de la machine en fonction des données d'image, de préférence numériques, importées via l'interface de données d'image.

11. Système comprenant un dispositif de commande à distance (1) qui est configuré selon l'une des revendications 1 à 10, ainsi qu'une grue, un engin de chantier ou un chariot de manutention, dans lequel, entre la grue, l'engin de chantier et/ou le chariot de manutention d'une part et le dispositif de commande à distance (1) d'autre part, une liaison de communication est prévue, via laquelle les ordres de commande saisis au poste de commande (2) du dispositif de commande à distance (1) sont transmissibles au dispositif de commande de la grue, de l'engin de chantier et/ou du chariot de manutention.
